# EUROPEAN PATENT SPECIFICATION

(11) **EP 2 940 423 B1**
(45) Date of publication and mention of the grant of the patent: **05.07.2017**
(21) Application number: 13868174.7
(22) Date of filing: 11.11.2013
(51) Int. Cl.: G01B 11/14, B67B 3/26, G01N 21/90

(54) **CAP INSPECTION DEVICE**
KAPPENPRÜFVORRICHTUNG
DISPOSITIF D'INSPECTION DE CAPSULE

(30) Priority: 27.12.2012 JP 2012285501
(43) Date of publication of application: 04.11.2015
(73) Proprietor: Kirin Techno-System Company, Limited, Kawasaki-shi, Kanagawa 210-0858 (JP)
(72) Inventor: TAKAHASHI, Chiyoko, Kawasaki-shi, Kanagawa 210-0858 (JP); NAKAMURA, Hiromune, Kawasaki-shi, Kanagawa 210-0858 (JP)
(74) Representative: Hoffmann Eitle
(86) International application number: PCT/JP2013/080420
(87) International publication number: WO 2014/103538

(56) References cited:
- EP-A1- 1 167 209
- JP-A- H1 019 509
- JP-A- H1 019 509
- JP-A- H1 072 096
- JP-A- H06 100 085
- JP-A- H06 100 085
- JP-A- 2000 118 515
- JP-A- 2007 069 909

## Description

### Technical Field

The present invention relates to an inspection apparatus for checking whether a cap is properly screwed on a mouth of a bottle, such as PET bottle.

### Background Art

A screw cap is widely used as a cap for sealing a mouth of a bottle, such as a PET bottle, which is filled with a soft drink or the like. An inner circumferential surface of the cap and an outer circumferential surface of the mouth of the bottle have screw structures, respectively, which engage with each other. The cap is screwed onto the mouth of the bottle, so that the cap is mounted on the mouth of the bottle.

A patent document 1 discloses a cap inspection apparatus which is known as a device for checking whether or not a screw cap is properly mounted on a mouth of a bottle. This cap inspection apparatus is configured to take an image of the cap that has been screwed onto the bottle, measure, from the image that has been taken, distances between lower ends of both sides of the cap and a flange which is formed on the mouth of the bottle, and determine whether the cap is properly screwed on the mouth of the bottle based on measurement results of the distances.

### Citation List

### Patent Literature

Patent document 1: Japanese laid-open patent publication No. 10-19509

### Summary of Invention

### Technical Problem

However, the conventional cap inspection apparatus is configured to take the image of the cap and the bottle only from one direction, and therefore the distances between the cap and the flange may vary depending on an angle of the cap. For example, if the mouth of the bottle itself bends or the entirety of the cap tilts, the image that has been taken only from one direction may not correctly indicate a screwed state of the cap.

The patent document 1 discloses a technique of taking images of a cap with use of three image generators which are arranged at intervals of approximately 120 degrees. However, three images, obtained by the three image generators, are processed individually, and therefore this approach produces nothing more than the result that is obtained by taking the image of the cap only from one direction. As a result, it is difficult for the conventional cap inspection apparatus to accurately inspect the screwed state of the cap.

The present invention has been made in order to solve the above drawback. It is therefore an object of the present invention to provide a cap inspection apparatus capable of accurately checking whether or not a cap is properly screwed on a mouth of a bottle.

### Solution to Problem

In order to achieve the above object, according to one aspect of the present invention, there is provided according to claim 1 a cap inspection apparatus for inspecting a screwed state of a cap on a mouth of a bottle, comprising: a plurality of imaging devices configured to take images of the cap and the mouth of the bottle from multiple directions; and an inspection processor configured to process the images taken by the plurality of imaging devices, wherein the plurality of imaging devices comprise at least three imaging devices arranged around the bottle at equal intervals, and wherein the inspection processor is configured to receive the images from the plurality of imaging devices, calculate, from the images, gap index values each indicating a magnitude of a gap between the cap and a support ring formed on the mouth of the bottle, calculate the sum of the gap index values or the average of the gap index values, which is obtained by dividing said sum by the number of imagining devices, and determine whether the cap is properly screwed on the mouth of the bottle based on the sum or the average.

In a preferred aspect of the present invention, the plurality of imaging devices are an odd number of imaging devices.

In a preferred aspect of the present invention, each of the gap index values indicates an area of the gap between the cap and the support ring, or a distance between the cap and the support ring.

In a preferred aspect of the present invention, the inspection processor is configured to determine that the cap is properly screwed on the mouth of the bottle if the sum or the average is not more than a predetermined first threshold value.

In a preferred aspect of the present invention, the inspection processor is configured to determine that the cap is properly screwed on the mouth of the bottle if the sum or the average is not less than a predetermined second threshold value.

In a preferred aspect of the present invention, the inspection processor is configured to determine that the cap is properly screwed on the mouth of the bottle if the sum or the average is within a predetermined range.

In a preferred aspect of the present invention, the cap inspection apparatus further comprises a plurality of illuminators configured to illuminate the cap from multiple directions, wherein the plurality of illuminators are located opposite to the plurality of imaging devices, respectively.

### Advantageous Effects of Invention

According to the present invention, images of a cap are taken from at least three directions, and a screwed state of the cap is determined based on the sum of the gap index values each indicating a gap between the cap and the support ring. These gap index values are obtained from the images of the cap. By adding up the gap index values, a variation in the gap existing along a circumferential direction of the cap is cancelled. Therefore, the cap inspection apparatus according to the present invention can accurately determine whether the cap is correctly screwed on the mouth of the bottle.

### Brief Description of Drawings

FIG. 1 is a plan view showing an embodiment of a cap inspection apparatus according to the present invention;
FIG. 2 is a diagram showing an image of a cap taken by an imaging device;
FIG. 3 is an enlarged diagram showing a gap between a lower end of the cap and a support ring appearing in the image;
FIG. 4 is a graph showing an average of gap index values;
FIG. 5 is a graph showing gap index values calculated from images taken by a single imaging device;
FIG 6 is a plan view showing a cap inspection apparatus having a pair of the imaging device and an illuminator; and
FIG. 7 is a graph schematically showing a magnitude of the gap between the cap and the support ring.

### Description of Embodiments

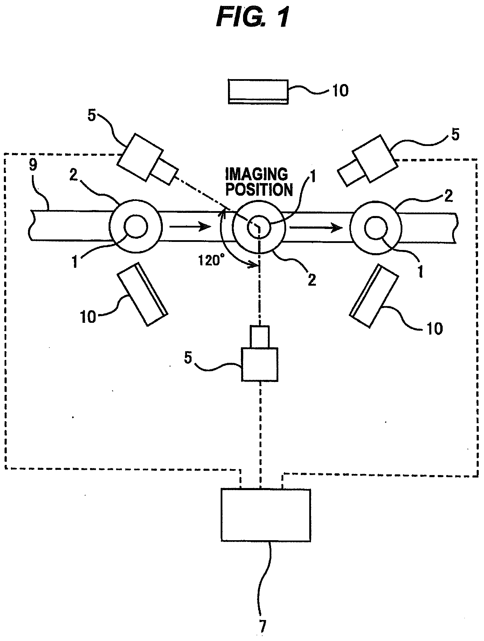

Embodiments of the present invention will be described below with reference to the drawings. FIG. 1 is a plan view showing an embodiment of a cap inspection apparatus according to the present invention. As shown in FIG 1, the cap inspection apparatus includes a plurality of imaging devices 5 for taking images of a cap 1 and a mouth of a bottle 2 from multiple directions, and an inspection processor 7 for processing the images that have been taken by the imaging devices 5. Bottles 2, with caps 1 screwed respectively on mouths thereof, are successively transported to the cap inspection apparatus by a transporting conveyer 9. While each bottle 2 is moved by the transporting conveyer 9, the imaging devices 5 take images of the mouth of the bottle 2 and the cap 1 mounted on the bottle mouth. The bottles 2 are transported, as they are, out of the cap inspection apparatus by the transporting conveyer 9.

In the embodiment shown in FIG. 1, three imaging devices 5 are arranged around the bottle 2 at equal intervals, i.e., intervals of 120 degrees. These imaging devices 5 are oriented toward the cap 1 on the bottle 2, and are configured to take images of the cap 1 and the mouth of the bottle 2 from three directions. Each imaging device 5 may be a camera including an image sensor, such as CCD or CMOS.

The cap inspection apparatus further includes a plurality of illuminators 10 for illuminating the bottle 2 from multiple directions. The number of illuminators 10 is the same as the number of imaging devices 5. In the embodiment shown in FIG. 1, three illuminators 10, corresponding to the three imaging devices 5, are provided. These three illuminators 10 are oriented toward the three imaging devices 5, respectively. The bottle 2 and the cap 1 are located between the imaging device 5 and the illuminator 10 that are paired.

When the bottle 2 is transported to a predetermined imaging positon (see FIG. 1), the imaging devices 5 take the images of the mouth of the bottle 2 on the transporting conveyer 9 and the cap 1 mounted on the bottle mouth. This predetermined imaging position is a position at which distances from the cap 1 to the imaging devices 5 are equal to each other. While the illuminator 10 is illuminating the cap 1 and the bottle 2, the imaging device 5, which is opposite to that illuminator 10, takes the image of the cap 1 and the bottle 2. In this embodiment, three imaging devices 5 simultaneously take the images of the cap 1 and the bottle 2 from multiple directions. Therefore, three images are obtained per one cap 1.

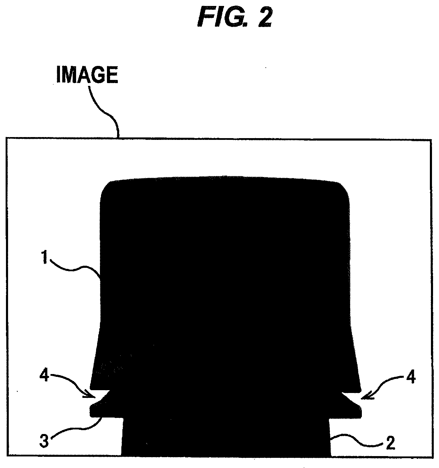

The imaging devices 5 are coupled to the inspection processor 7, and the images, which have been taken by the imaging devices 5, are transmitted to the inspection processor 7. This inspection processor 7 is configured to analyze the images and determine whether the cap 1 is properly screwed on the mouth of the bottle 2 from a result of the analysis. FIG. 2 is a diagram showing an image of the cap 1 that has been taken by the imaging device 5. As can be seen from FIG. 2, the image, which has been taken with the light irradiation from a back side of the cap 1, is a silhouette image. The cap 1 and a part of the mouth of the bottle 2 appear in this silhouette image.

As shown in FIG. 2, a support ring (or flange) 3 projecting radially outwardly is formed on the mouth of the bottle 2. The cap 1 is located above the support ring 3. If the cap 1 is correctly screwed on the mouth of the bottle 2, an appropriate gap is formed between the lower end of the cap 1 and the support ring 3. In contrast, if the cap 1 tilts or the cap 1 is not sufficiently screwed on the mouth of the bottle 2, the gap between the lower end of the cap 1 and the support ring 3 increases. Thus, the inspection processor 7 inspects the screwed state of the cap 1 on the mouth of the bottle 2 based on a magnitude of the gap between the lower end of the cap 1 and the support ring 3.

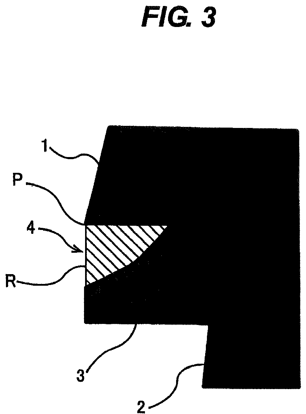

As can be seen from FIG. 2, two shapes (represented by reference numeral 4), each indicating the gap between the lower end of the cap 1 and the support ring 3, appear in the silhouette image. The inspection processor 7 measures the magnitude of each of the two gaps 4 appearing in the silhouette image as follows. FIG. 3 is an enlarged diagram showing the gap 4 between the lower end of the cap 1 and the support ring 3 shown in FIG. 2. The inspection processor 7 identifies a position of a lower edge P of the cap 1 in the image, and draws a boundary line R in a vertical direction downwardly from the lower edge P to the support ring 3. A region (indicated by a hatching pattern), which is located inside the boundary line R and through which the light has passed, is a region representing the gap 4. The inspection processor 7 calculates an area of this region that has been specified. For example, the inspection processor 7 can calculate an area from the number of pixels that occupy the region specified. A value of the area obtained in this manner is a gap index value representing the magnitude of the gap 4 between the cap 1 and the support ring 3.

Since two gaps 4 appear in one image as discussed above, two gap index values are obtained per one image. The inspection processor 7 receives three images from the three imaging devices 5, and calculates two gap index values for each of the three images to thereby obtain a total of six gap index values. Further, the inspection processor 7 calculates the sum of the six gap index values, and determines whether the cap 1 is properly screwed on the mouth of the bottle 2 based on the sum. More specifically, the inspection processor 7 determines that the cap 1 is properly screwed on the mouth of the bottle 2 if the sum is not more than a first threshold value, and determines that the cap 1 is not properly screwed on the mouth of the bottle 2 if the sum is larger than the first threshold value. This first threshold value is a preset value, and corresponds to an upper limit indicating the state in which the cap 1 is properly screwed on the mouth of the bottle 2.

Instead of the sum, an average of the gap index values per one image may be used. More specifically, the inspection processor 7 calculates the average by dividing the sum by three which is the number of imaging devices 5. The inspection processor 7 determines that the cap 1 is properly screwed on the mouth of the bottle 2 if the average is not more than a predetermined first threshold value, and determines that the cap 1 is not properly screwed on the mouth of the bottle 2 if the average is larger than the first threshold value.

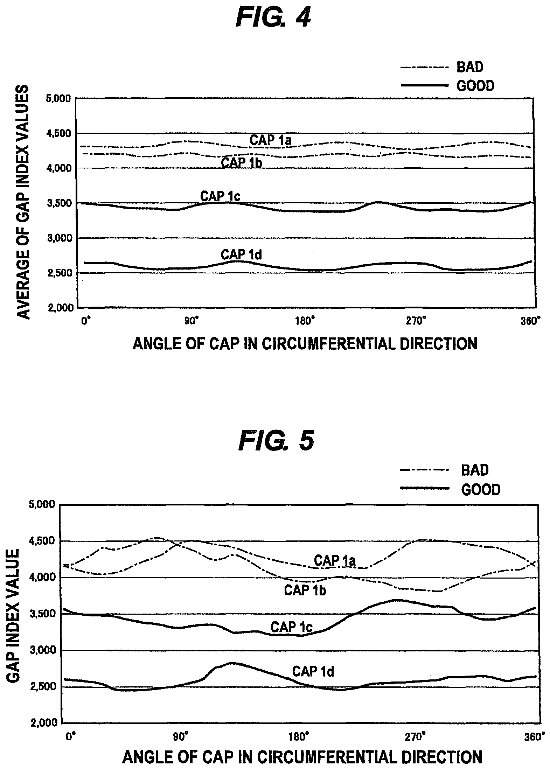

Next, an embodiment of a method of inspecting the cap 1 based on the above-discussed average will be described. FIG. 4 is a graph showing the average of the gap index values. In FIG. 4, vertical axis represents average of gap index values, and horizontal axis represents angle (0° to 360°) of the cap 1 in a circumferential direction thereof. FIG. 4 shows four averages calculated for four caps 1a to Id, respectively. The graph in FIG. 4 shows results of an experiment in which the cap 1 and the bottle 2 were rotated about an axis of the bottle 2 while images of the cap 1 and the mouth of the bottle 2 were taken multiple times at certain time intervals. The cap inspection apparatus shown in FIG. 1 is configured to take images of the cap 1 and the mouth of the bottle 2 without rotating the cap 1 and the bottle 2.

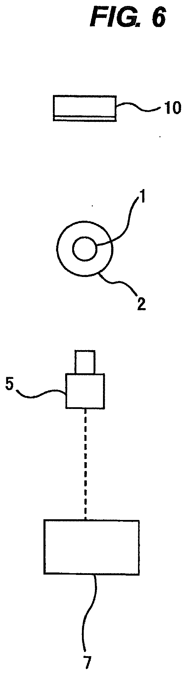

FIG. 5 is a graph as a comparative example showing gap index values calculated from images taken by a single imaging device 5. The graph shown in FIG. 5 is obtained by using a cap inspection apparatus shown in FIG. 6. This cap inspection apparatus shown in FIG. 6 includes one pair of the imaging device 5 and an illuminator 10.

As can be seen from comparison between the graph shown in FIG. 4 and the graph shown in FIG. 5, a fluctuation of the average of the gap index values (i.e., the gap areas) shown in FIG. 4 is smaller than that shown in FIG. 5 over the entire angle range. In contrast, the gap index values shown in FIG. 5 fluctuate greatly. As a result, in the example of FIG. 5, the result of comparison between the first threshold value and the gap index value can vary depending on the angle of the cap 1. For example, in a case where the first threshold value is set to 4000, the screwed state of a cap 1b is determined to be good or bad depending on the angle at which the image was taken. In the graph shown in FIG. 4, in a case where the first threshold value is set to 4000, the screwed state of the cap 1b is determined to be bad throughout the entire angle range, while the screwed state of a cap 1c is determined to be good throughout the entire angle range.

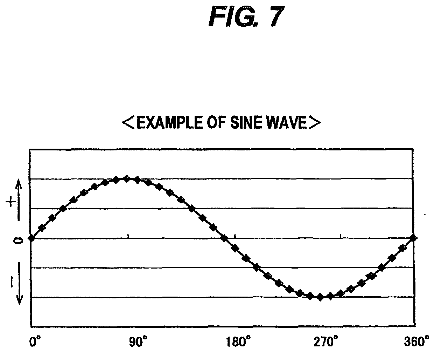

In general, the magnitude of the gap between the cap 1 and the support ring 3 fluctuates approximately in a sine wave as shown in FIG. 5. FIG. 7 is a graph schematically showing the magnitude of the gap between the cap 1 and the support ring 3. It is noted that the graph shown in FIG. 7 is provided for the purpose of explanation, and numerical values on its vertical axis do not correctly reflect the magnitude of the gap. In FIG. 7, the sum of the numerical values on the vertical axis at angles of 0°, 120°, 240° is zero. For the same reason, the cap inspection apparatus according to the present invention takes three images using three imaging devices 5 arranged at intervals of 120°, and can correctly determine the magnitude of the gap between the cap 1 and the support ring 3. That is, by adding up the gap index values, the variation in the gap existing along the circumferential direction of the cap 1 is cancelled. Therefore, the cap inspection apparatus can accurately determine whether the cap 1 is screwed on the mouth of the bottle 2.

The number of imaging devices 5 is not limited to the above embodiment, and more imaging devices 5 may be used. An odd number of imaging devices 5 may preferably be arranged around the bottle 2 at equal intervals. This is because the odd number of imaging devices 5 arranged around the bottle 2 at equal intervals can take images of the gap at different portions of the cap 1. In contrast, if the even number of imaging devices 5 are arranged around the bottle 2 at equal intervals, symmetrical two of these imaging devices 5 take the images of the gap at substantially the same portion of the cap 1.

If the cap 1 has been screwed onto the mouth of the bottle 2 excessively tightly, the gap between the cap 1 and the support ring 3 becomes excessively small. Thus, the inspection processor 7 may determine an excessively screwed state of the cap 1 using a second threshold value. Specifically, the inspection processor 7 determines that the cap 1 is properly screwed on the mouth of the bottle 2 if the average of the gap index values is not less than the second threshold value, and determines that the cap 1 is excessively tightly screwed on the mouth of the bottle 2 if the average of the gap index values is smaller than the second threshold value. The second threshold value is a preset value, and corresponds to a lower limit indicating the state in which the cap 1 is properly screwed on the mouth of the bottle 2.

The inspection processor 7 may determine both an insufficiently screwed state of the cap 1 and an excessively screwed state of the cap 1 using an allowable range of the average of the gap index values. Specifically, the inspection processor 7 determines that the cap 1 is properly screwed on the mouth of the bottle 2 if the average of the gap index values is within a range which is preset as an allowable range, and determines that the cap 1 is not properly screwed on the mouth of the bottle 2 if the average of the gap index values is out of the range.

In FIG. 4 and FIG. 5, the average of the gap index values is used to determine the screwed state, while the sum of the gap index values may be used as it is for determining the screwed state. In both cases, it is possible to improve the accuracy of the inspection of the screwed state of the cap 1 as well. Further, instead of the area of the gap, a distance between the lower end of the cap 1 and the support ring 3 may be used as the gap index value. In this embodiment also, the same effect can be obtained.

The cap inspection apparatus according to the present invention is suitable for use in an inspection of a screw cap mounted on a PET bottle, while the present invention can also be applied to an inspection of a screw cap mounted on a bottle other than the PET bottle. Furthermore, images that have been taken by the cap inspection apparatus according to the present invention can be commonly used in another inspection apparatus for judging an abnormal shape of a cap.

While the embodiments of the present invention have been discussed, it should be noted that the present invention is not limited to the above-discussed embodiments, and various modifications and embodiments may be made within a technical concept of the present invention as defined by the appended claims.

### Industrial Applicability

The present invention is applicable to an inspection apparatus for checking whether a cap is properly screwed on a mouth of a bottle, such as PET bottle.

### Reference Signs List

- 1: cap
- 2: bottle
- 3: support ring
- 4: gap
- 5: imaging device
- 7: inspection processor
- 9: transporting conveyer
- 10: illuminator

## Claims

1. A cap inspection apparatus for inspecting a screwed state of a cap on a mouth of a bottle, comprising:
a plurality of imaging devices (5) configured to take images of the cap (1) and the mouth of the bottle (2) from multiple directions; and
an inspection processor (7) configured to process the images taken by the plurality of imaging devices (5),
wherein the plurality of imaging devices (5) comprise at least three imaging devices (5) arranged around the bottle (2) at equal intervals, and
wherein the inspection processor (7) is configured to
receive the images from the plurality of imaging devices (5),
calculate, from the images, gap index values each indicating a magnitude of a gap between the cap (1) and a support ring (3) formed on the mouth of the bottle (2),
calculate the sum of the gap index values or the average of the gap index values, which is obtained by dividing said sum by the number of imaging devices (5), and
determine whether the cap (1) is properly screwed on the mouth of the bottle (2) based on said sum or said average.

2. The cap inspection apparatus according to claim 1, wherein the plurality of imaging devices (5) are an odd number of imaging devices (5).

3. The cap inspection apparatus according to claim 1 or 2, wherein each of the gap index values indicates an area of the gap between the cap (1) and the support ring (3), or a distance between the cap (1) and the support ring (3).

4. The cap inspection apparatus according to any one of claims 1 through 3, wherein the inspection processor (7) is configured to determine that the cap (1) is properly screwed on the mouth of the bottle (2) if said sum or said average is not more than a predetermined first threshold value.

5. The cap inspection apparatus according to any one of claims 1 through 4, wherein the inspection processor (7) is configured to determine that the cap (1) is properly screwed on the mouth of the bottle (2) if said sum or said average is not less than a predetermined second threshold value.

6. The cap inspection apparatus according to any one of claims 1 through 3, wherein the inspection processor (7) is configured to determine that the cap (1) is properly screwed on the mouth of the bottle (2) if said sum or said average is within a predetermined range.

7. The cap inspection apparatus according to any one of claims 1 through 6, further comprising:
a plurality of illuminators (10) configured to illuminate the cap (1) from multiple directions,
wherein the plurality of illuminators (10) are located opposite to the plurality of imaging devices (5), respectively.

## Patentansprüche

1. Verschluss-Prüfvorrichtung zum Überprüfen eines geschraubten Zustandes eines Verschlusses auf einer Öffnung einer Flasche, umfassend:
eine Mehrzahl von Bildgebungsvorrichtungen (5), die dazu konfiguriert sind, Bilder des Verschlusses (1) und der Öffnung der Flasche (2) aus mehreren Richtungen aufzunehmen; und
einen Prüfprozessor (7), der dazu konfiguriert ist, die von der Mehrzahl von Bildgebungsvorrichtungen (5) aufgenommenen Bilder zu verarbeiten,
wobei die Mehrzahl von Bildgebungsvorrichtungen (5) mindestens drei Bildgebungsvorrichtungen (5) umfassen, die um die Flasche (2) in gleichmäßigen Intervallen angeordnet sind, und
wobei der Prüfprozessor (7) dazu konfiguriert ist,
die Bilder von der Mehrzahl von Bildgebungsvorrichtungen (5) zu empfangen,
aus den Bildern Zwischenraumindexwerte zu berechnen, die jeweils eine Größe eines Zwischenraums zwischen dem Verschluss (1) und einem Stützring (3) angeben, der an der Öffnung der Flasche (2) gebildet ist,
die Summe der Zwischenraumindexwerte oder den Durchschnitt der Zwischenraumindexwerte, der erhalten wird, indem die Summe durch die Anzahl von Bildgebungsvorrichtungen (5) geteilt wird, zu berechnen, und
zu bestimmen, ob der Verschluss (1) korrekt auf die Öffnung der Flasche (2) geschraubt ist, auf der Basis der Summe oder des Durchschnitts.

2. Verschluss-Prüfvorrichtung nach Anspruch 1, wobei die Mehrzahl von Bildgebungsvorrichtungen (5) eine ungerade Zahl von Bildgebungsvorrichtungen (5) ist.

3. Verschluss-Prüfvorrichtung nach Anspruch 1 oder 2, wobei jeder der Zwischenraumindexwerte eine Fläche des Zwischenraums zwischen dem Verschluss (1) und dem Stützring (3) oder einen Abstand zwischen dem Verschluss (1) und dem Stützring (3) angibt.

4. Verschluss-Prüfvorrichtung nach einem der Ansprüche 1 bis 3, wobei der Prüfprozessor (7) dazu konfiguriert ist, zu bestimmen, dass der Verschluss (1) korrekt auf die Öffnung der Flasche (2) geschraubt ist, falls die Summe oder der Durchschnitt nicht mehr als ein vorbestimmter erster Schwellenwert ist.

5. Verschluss-Prüfvorrichtung nach einem der Ansprüche 1 bis 4, wobei der Prüfprozessor (7) dazu konfiguriert ist, zu bestimmen, dass der Verschluss (1) korrekt auf die Öffnung der Flasche (2) geschraubt ist, falls die Summe oder der Durchschnitt nicht weniger als ein vorbestimmter zweiter Schwellenwert ist.

6. Verschluss-Prüfvorrichtung nach einem der Ansprüche 1 bis 3, wobei der Prüfprozessor (7) dazu konfiguriert ist, zu bestimmen, dass der Verschluss (1) korrekt auf die Öffnung der Flasche (2) geschraubt ist, falls die Summe oder der Durchschnitt innerhalb eines vorbestimmten Bereichs ist.

7. Verschluss-Prüfvorrichtung nach einem der Ansprüche 1 bis 6, ferner umfassend:
eine Mehrzahl von Beleuchtungsvorrichtungen (10), die dazu konfiguriert sind, den Verschluss (1) aus mehreren Richtungen zu beleuchten,
wobei sich die Mehrzahl von Beleuchtungsvorrichtungen (10) jeweils gegenüber der Mehrzahl von Bildgebungsvorrichtungen (5) befinden.

## Revendications

1. Appareil d'inspection de capsule pour inspecter un état vissé d'une capsule sur un goulot d'une bouteille, comprenant :
une pluralité de dispositifs d'imagerie (5) configurés pour capturer des images de la capsule (1) et du goulot de la bouteille (2) à partir de plusieurs directions ; et
un processeur d'inspection (7) configuré pour traiter les images capturées par la pluralité de dispositifs d'imagerie (5),
dans lequel la pluralité de dispositifs d'imagerie (5) comprend au moins trois dispositifs d'imagerie (5) agencés autour de la bouteille (2) à des intervalles égaux, et
dans lequel le processeur d'inspection (7) est configuré pour
recevoir les images à partir de la pluralité de dispositifs d'imagerie (5),
calculer, à partir des images, des valeurs d'indice d'espacement indiquant chacune une grandeur d'un espacement entre la capsule (1) et un anneau de support (3) formé sur le goulot de la bouteille (2),
calculer la somme des valeurs d'indice d'espacement ou la moyenne des valeurs d'indice d'espacement, qui est obtenue en divisant ladite somme par le nombre de dispositifs d'imagerie (5), et
déterminer si la capsule (1) est correctement vissée sur le goulot de la bouteille (2) sur la base de ladite somme ou de ladite moyenne.

2. Appareil d'inspection de capsule selon la revendication 1, dans lequel la pluralité de dispositifs d'imagerie (5) est un nombre impair de dispositifs d'imagerie (5).

3. Appareil d'inspection de capsule selon la revendication 1 ou 2, dans lequel chacune des valeurs d'indice d'espacement indique une superficie de l'espacement entre la capsule (1) et l'anneau de support (3), ou une distance entre la capsule (1) et l'anneau de support (3).

4. Appareil d'inspection de capsule selon l'une quelconque des revendications 1 à 3, dans lequel le processeur d'inspection (7) est configuré pour déterminer que la capsule (1) est correctement vissée sur le goulot de la bouteille (2) si ladite somme ou ladite moyenne n'est pas supérieure à une première valeur seuil prédéterminée.

5. Appareil d'inspection de capsule selon l'une quelconque des revendications 1 à 4, dans lequel le processeur d'inspection (7) est configuré pour déterminer que la capsule (1) est correctement vissée sur le goulot de la bouteille (2) si ladite somme ou ladite moyenne n'est pas inférieure à une seconde valeur seuil prédéterminée.

6. Appareil d'inspection de capsule selon l'une quelconque des revendications 1 à 3, dans lequel le processeur d'inspection (7) est configuré pour déterminer que la capsule (1) est correctement vissée sur le goulot de la bouteille (2) si ladite somme ou ladite moyenne est dans une plage prédéterminée.

7. Appareil d'inspection de capsule selon l'une quelconque des revendications 1 à 6, comprenant en outre :
une pluralité d'éléments d'éclairage (10) configurés pour éclairer la capsule (1) à partir de plusieurs directions,
dans lequel la pluralité d'éléments d'éclairage (10) est respectivement située à l'opposé de la pluralité de dispositifs d'imagerie (5).
